(19) Europäisches Patentamt
European Patent Office
Office européen des brevets

(11) Publication number: **0 315 559 A1**

(12) # EUROPEAN PATENT APPLICATION

(21) Application number: **88500047.1**

(22) Date of filing: **18.05.88**

(51) Int. Cl.$^4$: **C 25 B 3/10**

(30) Priority: **05.11.87 ES 8703162**

(43) Date of publication of application: **10.05.89 Bulletin 89/19**

(84) Designated Contracting States: **AT BE CH DE FR GB GR IT LI LU NL SE**

(71) Applicant: **UNIVERSIDAD DEL PAIS VASCO**
**Barrio de Ibaeta**
**20009 San Sebastian (Guipuzcoa) (ES)**

**DIPUTACION FORAL DE GUIPUZCOA**
**Plaza Guipuzcoa s/n**
**E-20004 San Sebastian (Guipuzcoa) (ES)**

(72) Inventor: **Fernandez Otero, Toribio**
**Avda. de Zumalacárregui No. 25 5o Izda**
**San Sebastian (Guipuzcoa) (ES)**

**De Larreta-Azelain, Enrique**
**José Maria Salaberria No. 7 2o-C**
**San Sebastian (Guipuzcoa) (ES)**

(74) Representative: **Gomez-Acebo y Pombo, José Miguel**
**c/o CLARKE, MODET & Co. Paseo de la Castellana 164**
**E-28046 Madrid (ES)**

(54) **A method for controlling the morphology of polymeric conductor films.**

(57) A method for controlling the morphology of polymeric conductor films, through which the physical properties of polymeric films can be regulated, electrogenerated from heterocyclic monomers in the general formula (I):

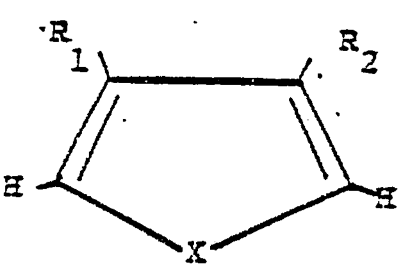

(I)

in which X can be : O, S, Se, Te, N-R and $R_1$, $R_2$ or $R_3$ can be equal or different; and signify independently, one of the following groups: H, $NO_2$, $SO_2$, CH, $HN_2$, $CF_3$, Cl, F, COOH, COOR, SCN, OCN, SR, $SO_2$, R, SOR, $PO(OR)_2$, $OCH_3$, $OCH_2$, R, O=C-R, R being an alkyl radical with 1 to 12 linear or branched chain carbon atoms, or aryl with 6 to 12 carbon atoms.

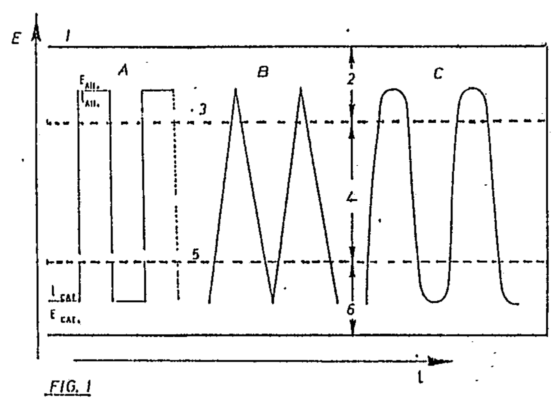


FIG. 1

EP 0 315 559 A1

## Description

### A METHOD FOR CONTROLLING THE MORPHOLOGY OF POLYMERIC CONDUCTOR FILMS

This invention refers to a method for controlling the morphology of polymeric conductor films and more specifically refers to a method for the electrosynthesis of polymeric conductor films, for the control of the morphology, thickness, adherence and shine of the said polymeric conductor films through the method of their synthesis.

Electrochemical methods are already known, such as triangular potential sweeping, potential jumps, or sinusoidal waves, which enable the morphology of polymer conductor films obtained by electrosynthesis (dentritic,with lunar or smooth surface). At the same time, the originally non-adhesive films, likely to be peeled and used in non-stop obtaining processes, become very adhesive and can only be removed by sandpapering or chemical treatment. Dentritic and nonadhesive structures are matt and quite opaque. Smooth and adhesive structures are shiny and more transparent.

This invention refers to the synthesis and control of the morphology, thickness, adherence, shine and conductivity of polymeric conductor films through the use of different electrochemical methods in their electrosynthesis.

The formation and growth of conductor polymers on metals, graphite, inorganic semiconductors or transparent electrodes have constituted an important field of research or inventive activity for some years. This is due to the broad range of technological possibilities which these materials offer.

Such apparently different technologies as microelectronics 85 JP-279 592 85, visualization devices 85 JP-236901 851023; 83 US-566757 83 1229; 85JP-189172 850828; high stability and long-life batteries 84 US-624647 840626; 85JP-251350 851108; selective ion membranes 85JP-259803 851121, selective electrodes 85JP-180466 850819; 86GB-008637 860409; 86GP-014859 860618, oxide-reductase enzume immobilizers 85JP-257481 851113; the specific synthesis of new medicines, electrophotography and electroreprography 76US-654437 760202, optical devices 86DE-601067 860116; 85JP-120196 850603, etc. offer new and promising prospects, based on the properties of conductor polymers.

One of the processes most studied has been the electrochemical synthesis of polypyrrol films through potentiostatic techniques 84JP-008038 840119; 85JP-271550 851204, galvanostatic techniques 85JP-239415 851028; 85JP-120594 850605; 83JP-196062 831021, potentiodynamic techniques: Díaz et al. J. Electroanal. Chem. Vol. 121, 355 (1981): T.F. Otero et al, Polymer, Vol. 28, 651 (1987). Considerable biography can also be found on the study of the structure, electrical and optical properties, electrochemical performance and stability in different electrolytic media and other very important physical and chemical properties from the point of view of the technological applications of these polymers.

Until now, electrochemical methods have been consi dered as a disadvantage, although inevitable to reach the polymer it is wished to study, but not as a powerful tool capable of controlling the physical and chemical properties of the material. It has now been discovered, and this is what constitutes the object of this invention, that these electrochemical methods are applicable for obtaining films "made to measure", in accordance with each of the applications it is wished to give them.

Polymeric films formed according to the bibliographic references have a dendrite structure, are matt, have low superficial adherence (unless the surface of the electronic conductor is subjected to some prior treatment) and have a good range of conductivities from $10^{-4}\ \Omega^{-1}\ cm^{-1}$ to $10^{3}\ \Omega^{-1}\ cm^{-1}$. These properties can be modified by controlling the method of synthesis and the chemical and electrical variables. This invention claims the use of alternating currents and the modifications of the frequency as the main variable for controlling the physical properties.

When an electronic conductor is subjected to an alternating current in an ionic conductor containing a dissolved monomer, likely to form a conductor polymer by electrosynthesis, films are obtained with a dentritic structure at low frequencies and smooth films at high frequencies. The gradual change in frequency causes a progressive modification in the structure. The limit values of the frequency (mainly of high frequency) depend, for a monomer, mainly on the nature of the electrode and the solvent, and provided the elctrolyte does not prevent electropolymerization of the electrolyte concentration.

The most suitable range of potentials is determined through a triangular potential sweeping (20-200 $mV.s^{-1}$), which gives a voltamogram as a reply. We shall disclose a process of anodic electropolymerization. The description for cathodic processes would be similar, changing anode by cathode, anodic by cathodic and oxidation by reduction. The voltamogram has very low current densities until the start of monomeric oxidation, giving rise to a maximum, which is followed by a passive area and the discharge of the solvent or electrolyte. From the starting potential of oxidation to the maximum, oxidation of the monomer and formation of the conductor polymer on the electrode takes place. At more anodic potentials, a passive area appears related with the degradation of the polymer and loss of conductivity, generally by nucleophylic attack of the electrolyte or of the solvent.

From the point of view of the formation and growth of conductor films electrogenerated by oxidation, the anodic limit of potential has to be within the area we have called of monomeric oxidation-polymerization. This area becomes broader on increasing the sweeping velocity (increases the frequency of the alternating current), on reducing the concentration of the electrolyte and increasing the temperature. The adequate combination of these three variables will enable us to control the speed of growth and the speed per cycle, and

hence the structure, morphology and the rest of the physical parameters.

After determining the most suitable anodic limit of electrolyte and temperature for a monomer concentration, at the same sweeping speed, consecutive sweeps are made from different cathodic limits until the anodic limit chosen is reached. As the polymer grows on the electrode, the generation of oxidation-reduction processes of the polymeric films can be observed at lower overpressure than the monomeric oxidation-polymerization. The conductivity of the polymeric films is related with their state of oxidation or reduction. The oxidated states correspond to the input of contraions of the electrolyte within the polymer, forming electrolytic polymers or load transfer complexes of high conductivity. When the polymer is reduced, its conductivity decreases. The most suitable cathodic limit for alternating current is within the polymeric reduction area. This zone has a scope of potentials which decreases (at more cathodic potentials, solvent discharge of the electrolyte appears) on increasing the sweeping velocity (the frequency of the alternating current increases), to reduce the concentration of the electrolyte or of the monomer or as the temperature drops.

Experiments are conducted in an inert atmosphere, in a cell with two or one compartments, depending on whether or not products are formed in the contraelectrode which affect polymerization.

In order to understand this invention better, a detailed description is made hereinbelow, with reference to the attached drawings, in which:

Figure 1 represents a diagram of variation in potential to which the electrode is subjected, to generate the polymer film.

Figure 2 represents a voltamogram obtained with an electrolyte made of polypyrrol.

Figure 3 represents a graph of consecutive sweepings which enable the growth of the polypyrrol thickness to be observed.

Figure 4 represents a graph of the current/time density.

Figures 5, 6, 7 and 8 represent micrographies of polypyrrol films with different polarization and/or sweeping times.

Figure 9 shows a voltamogram obtained with an electrolyte made of polythiophene.

Figure 10 shows a graph of consecutive sweepings which enable the growth in the thickness of the polythiophene film to be observed.

Figures 11, 12, 13 and 14 show micrographies of polythiophene films with different polarization and/or sweeping times.

The diagram of variation in potential to which the electrode is subjected to generate the polymeric film is shown in figure 1.

In this figure the discharge potential of the solvent or of the electrolyte has been illustrated in the X-axis.

In this figure, the following are represented :

A = square waves;
B = triangular sweepings;
C = sinusoidal waves;
1 = passive area; non-conductor polymer
2 = monomeric oxidation-polymerization area
3 = potential of monomeric oxidation
4 = area in which the polymer is oxidized and reduced
5 = potential to which the polymer has been completely reduced.
6 = area in which the polymer is reduced.

The square waves are characterized by their anodic polarization potential (Ean) and the polarization time of that power ($t_{an}$); the cathodic polarization potential ($E_{cat}$) and its polarization time at that potential ($t_{cat}$). The anodic and cathodic polarization potentials correspond to the limits we have fixed by cyclic voltametry. Anodic and cathodic polarization times will define the frequency and may be equal or different. Both are essential for controlling the morphology of the film and other physical properties.

The triangular sweepings of potential are characterized by the anodic and cathodic limits (already fixed) and the sweeping velocity. Ramps may be symmetric or asymmetric (different anodic and cathodic sweeping velocities).

Sinusoidal waves are characterized by their amplitude and frequency. They must be such that they observe the diagram set forth.

Through any of the methods, long times of permanence per cycle in the monomeric oxidation - polymerization area give a not very adhesive film with dendrite morphology (in micrography) (peels easily) matt and with high conductivity in the oxidized state. Short times of permanence give very smooth, adhesive, transparent and shiny films (in micrographies). With symmetrical waves, the films pass from dentritic structures at low frequencies to smooth structures at high frequencies. At intermediate frequencies, they have a lunar surface appearance (in the micrograph) and intermediate adherences. The times of permanence per cycle in the potential area in which the electrode is reduced is basic for adherence and morphology.

The number of potential cycles (number of square waves, number of triangular sweepings or number of sinusoidal cycles) will define the thickness of the films.

A control voltamogram, obtained by a potential sweeping, made with the film already formed inside the bottom electrolyte (without monomer), serves to obtain the thickness of the film (indirectly) from the load density necessary to oxidize or reduce the polymeric film.

The full range of applications makes all the possibilities useful; not very adhesive films, which peel easily to obtain continuous sheets; very adhesive films, with a very porous structure (dendrites) for batteries; very adhesive, smooth films for microelectronic devices, coatings of photogalvanic cells, etc.

This invention offers the possibility of obtaining films "made to measure" for each application, either in one process or through successive processes. Examples: a very adhesive film by square consecutive waves with high frequency onto which a porous structure is superposed by polarization to E = Cte or square waves at very low frequency.

The invention also offers the possibility of obtaining the formation of two-layers or multilayers: formation of a first single layer of a polymer, rinsed and transferred to another monomeric solution generating a second polymer on the first. And so on. We have already mentioned how to control the thickness of successive single layers, if required.

The frequencies studied vary from 0.01 to 20 cycles per second. In many cases, frequencies of 5 cycle.$s^{-1}$ (summetric) give very smooth adhesive films, whereas 0.1 cycle.$s^{-1}$ give films with a dentritic structure quite similar to those obtained by polarization.

Through this method, which constitutes the object of this invention, the physical properties of polymeric films generated from heterocyclic monomers with the following general formula (I) can be regulated :

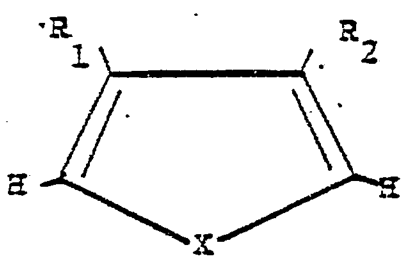

(I)

in which X can be: O, S, Se, Te, N-R

and $R_1$, $R_2$ or $R_3$ can be equal or different; and signify independently between each other, one of the following groups: H, $NO_2$, $SO_2$, CN, $NH_2$, $CF_3$, Cl, F, COOH, COOR, SCN, OCN, SR, $SO_2$, R, SOR, $PO(OR)_2$, $OCH_3$, $OCH_2$, R O=C-R, in which R is an alkyl radical with 1 to 12 linear or branched chain carbon atoms, or aryl with 6 to 12 carbon atoms.

As solvents, according to sollubility, the following are used: water, acetonitrile, THF, DMT, methyl-acetone, pentane, hexane,benzene, toluene, propylen-carbonate, methanol, ethanol or nitrobenzene or their mixtures.

As support electrolytes, the following are considered: HCl, HBr, IH, $H_2SO_4$, $HNO_3$, $HClO_4$, and the salts of these acids, para-toluene-sulphonic acid and its salts, alkaline or alkyl-amino tetrafluorborates, $CX_3SO_3H$, in which H = H, F, Cl, Br, I; $XPF_6$, $XSbF_6$, $XSbCl_6$, $SPCl_6$ in which X = Li, N, K or an alkyl-ammonium with 1 to 6 carbon atoms preferably, or their mixtures.

As electrodes, metals, inorganic semiconductors, graphite, transparent electrodes, etc. can be used.

Example 1

In this example, the formation of different thicknesses of polypyrrol films are disclosed, adherences, microstructures, and shine, from 0.1M solutions of Pyrrol and 0.1M of $LiClO_4$ in acetonitrile. As a work electrode, a sheet of Pt was used, as a counter-electrode a Pt net. The reference electrode was of saturated calomel. All the potentials are given with respect to the E.C.S.

Figure 2 shows a voltamogram obtained at 20 mV.$s^{-1}$ with the areas of oxidation-polymerization, passivation and decomposition of the electrolyte.

Figure 3 corresponds to consecutive sweepings carried out to the oxidation-polymerization area, in which the growth in the polymer thickness can be seen in the oxidation-reduction area of the polymer and of the potential to which we can consider the polymer reduced.

Figure 4 shows the current density/time response when the electrode was subjected to consecutive potential jumps. The polymer thickness grows quickly at the beginning and slowly after longer times.

In the micrograph in figure 5 the microstructure of a film is seen, formed through potential jumps of -600 mV to 600 mV, with symmetric t second waves of anodic polarization with 5 seconds of cathodic polarization, for 300 seconds of total anodic polarization (the sum of those of the different jumps). The film peels quite easily from the electrode and has a permanent matt black colour.

When the anodic and cathodic polarization times drop to 0.2 seconds each, when the total anodic polarizatime time is 300 seconds, the film in the micrograph in figure 6 is obtained, with a very adhesive lunar surface structure; the characteristic electrochromism of these films is maintained, with considerable transparency which is gradually lost with successive sweepings.

Maintaining the total anodic polarization time con stant (300 seconds), and lowering that of each sweeping cycle to 0.1 seconds, a smooth, very adhesive, electrochromic and shiny film is obtained, as shown in the

micrograph in figure 7.

When the film is formed by cyclic voltametry between the same limits at a sweeping velocity of IV.$s^{-1}$,the film shown in the micrograph in figure 8 was obtained. It is dark blue and very shiny and can only be removed by sandpapering or chemical etching and with a marked electrochromism when subjected to potential sweeping jumps in the bottom electrolyte.

Example 2

In this second example, the formation of different thicknesses of polythiophene is disclosed, together with adherences, microstructures and shine, from 0.1M solutions of thiophene and 0.1M of $LiClO_4$ in acetonitrile. As work electrode a sheet of Pt was used, as a counter-electrode, a Pt net. The reference electrode was made of saturated calomel. All the potentials are given with respect to the E.C.S.

Figure 9 shows a voltamogram obtained at 20 mV.$s^{-1}$ in which, as in the case of pyrrol, the monomeric oxidation-polymerization, passivation and decomposition areas of the electrolyte can be seen.

The voltamograms in figure 10 correspond to consecutive sweepings of potential made up to the oxidation-polymerization area; at potentials lower than monomeric oxidation, the increase in the oxidation-reduction process of the polymer, related with the increase in thickness of the polymeric film, can be seen.

The micrograph in figure 11 shows the dentritic microstructure of a polythiophene film formed by anodic polarization at 1700 mV for 300 seconds. The film is black and matt and adheres very little to the electrodic surface.

When polymerization takes place through jumps or symmetric square waves of potential, with 0.5 seconds of anodic polarization and 0.5 seconds of cathodic polarization per wave, maintaining 300 seconds of total anodic polarization, we obtain a polymeric film with a granular morphology structure formed by very small diameter dendrites, as shown in the micrography in figure 12. The film is matt, dark (almost black) and has no electrochromism, increasing its adherence with respect to the previous case.

Maintaining the total anodic polarization time constant at 300 seconds, and lowering the time of each jump or wave to 0.1 seconds, we obtain the film shown in the micrography in figure 13; smooth, very adhesive and shiny. This film also has a marked electrochromic performance.

If the polymeric film is electrogenerated by cyclic voltametry, between the limits given in figure 10, at a sweeping velocity of 1 V .$S^{-1}$, the film whose morphology is shown in the micrography of figure 14 is obtained. The film is smooth, very shiny, electrochromic and extremely adhesive.

The previous films were obtained at room temperature. However, the method can be performed according to this invention within a range of temperatures between -20° C and + 80° C, as maximum. The coating speed drops as the temperature falls. The concentration of monomer or of the electrolyte increases with the concentration of the monomer and that of the electrolyte (sic). At temperatures over 60° C. films which are not very good conductors are obtained. The conductivity also drops when the films are generated on rotatory disc electrodes.

**Claims**

1.- A method for controlling the morphology of conductor polymer films, especially for controlling their morphology, thickness, adherence and shine, characterized in that
it includes polymerizing at a temperature between -20° C. and a maximum of + 80° C., preferably under inert atmosphere, a combination of one or several heterocyclic monomers, with the general formula (I)

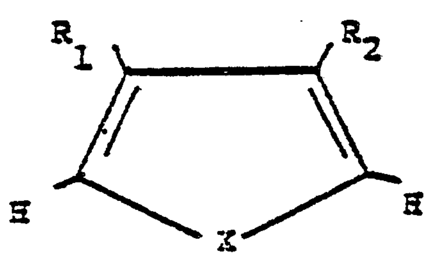

(I)

in which
X signifies O, S, Se, Te, N-R
$R_1$, $R_2$ and $R_2$ can be equal or different and signify, respectively, independently, hydrogen, $NO_2$, $SO_2$, CN, $NH_2$, $CF_3$, Cl, F, COOH, COOR, SCN, OCN, SR, $SO_2R$, SOR, $PO(OR)_2$, $OCH_3$, $OCH_2R$, O=C-R,
in which

R signifies a linear or branched chain alkyl radical with 1 to 12 carbon atoms or one aryl radical with 6 to 12 carbon atoms, an electrode and/or a solvent under electrosynthesis conditions.

2.- A method according to claim 1, characterized in that the solvent is chosen among the group formed by water, electronitrile, THF, DMF, methyl-acetone, pentane, hexane, benzene, toluene, propylen, carbonate, methanol, ethanol or nitrobenzene or their mixtures.

3.- A method according to claim 1, characterized in that the electrolyte is chosen among the group formed by HCl, HBr, IH, $H_2SO_4$, $HNO_3$, $HClO_4$, and the salts of these acids, para-toluene-sulphonic acid, and its salts, alkaline or alkyl-ammonium tetrafluoroborates, $CX_3SO_3H$ in which X = H, F, Cl, Br, I: $XPF_6$, $XSbF_6$, $XSbCl_6$, $SPCl_6$ in which X = Li, N, K or an alkyl-ammonium with 1 to 6 atoms of carbon, preferably, or its mixtures.

4.- A method according to claim 1, characterized in that polimerization takes place by the action of alternating currents which include square potential waves, triangular potential sweepings, potential sinusoidal waves or the like.

5.- A method according to claim 1, characterized in that the electrosynthesis conditions are chosen so that the most anodic part of the electronic wave penetrates in the monomeric oxidation region, corresponding to each monomer, the most cathodic part of that wave reaching the region of potentials in which the polymer is in a reduced state, not exceeding the discharge of the solvent used.

6.- A method according to claims 1 to 3, characterized in that the alternating current has 0.1 cycle.$s^{-1}$ to 20 cycles per second.

7.- A method according to claims 1 to 4, characterized in that symmetric waves are applied ($t_{an} = t_{cat}$, anodic sweeping velocity of potential = cathodic sweeping velocity of potential) or asymmetric waves.

8.- A method according to claims 1 to 5, characterized in that different or variable frequencies are applied successively or progressively.

9.- A method according to claims 1 to 6, characterized in that the number of potential cycles, the monomer concentration from 0.001 M to 5 M. the electrolyte concentration from 0.01 M to 2 M or the temperature are varied.

10.- The application of the method according to claims 1 to 9, to obtain single layers or multilayers of homopolymers or copolymers for any of the following applications: batteries, microelectronic devices, visualization devices, elective membranes, solar batteries, photo-electrochemical cells, antistatic coatings, electromagnetic armourings, electrometers, catalytic electrodes, sensor electrodes (gas, immunosensors, biosensors, humidity sensors, etc.), electrooptical devices, electrophotography and electroreprography, optical or electrical commutators, etc.

11.- Single layers or multilayers of homopolymers or copolymers obtainable according to the method in claims 1 to 7.

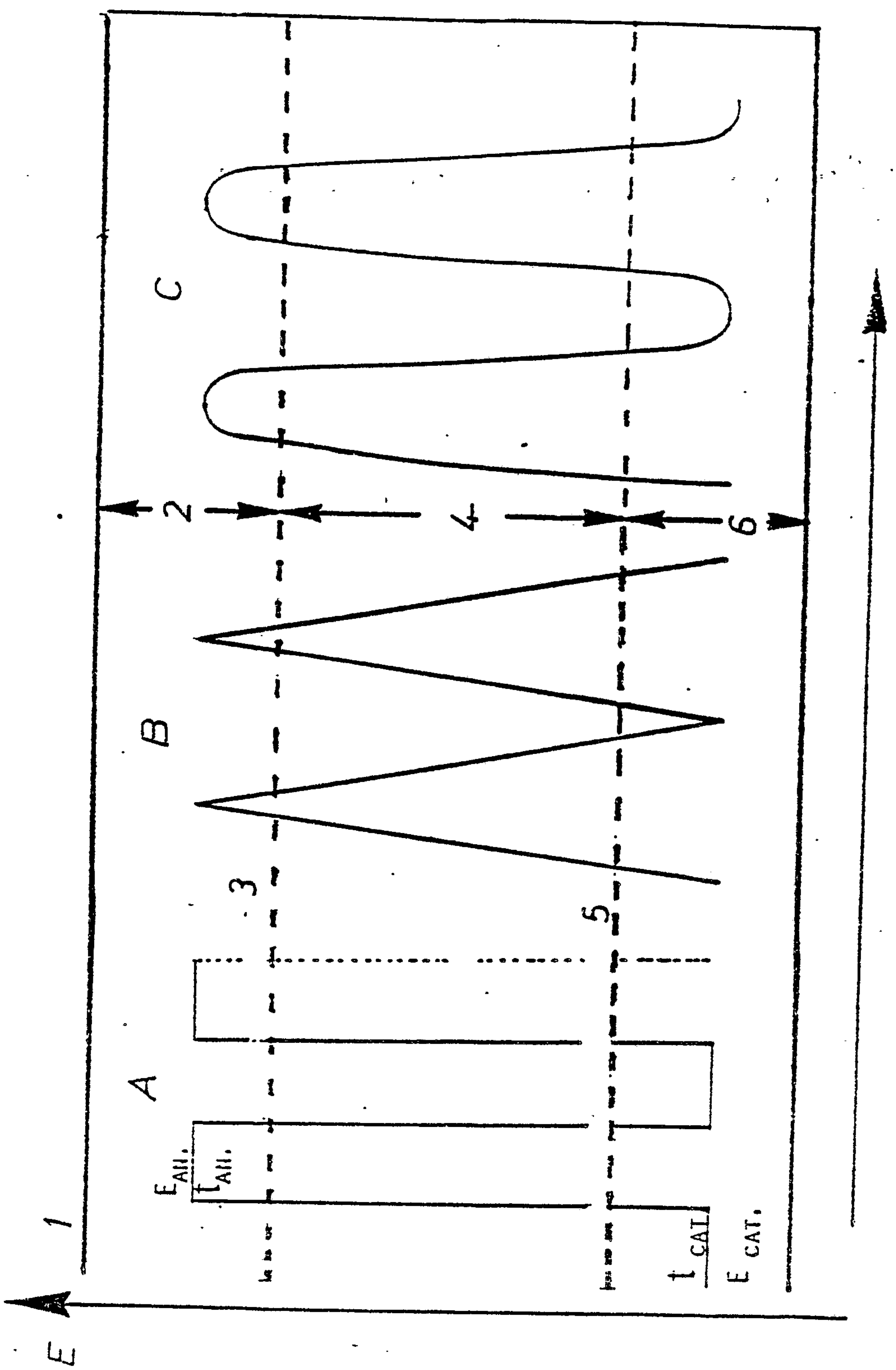


FIG. 1

FIG. 2

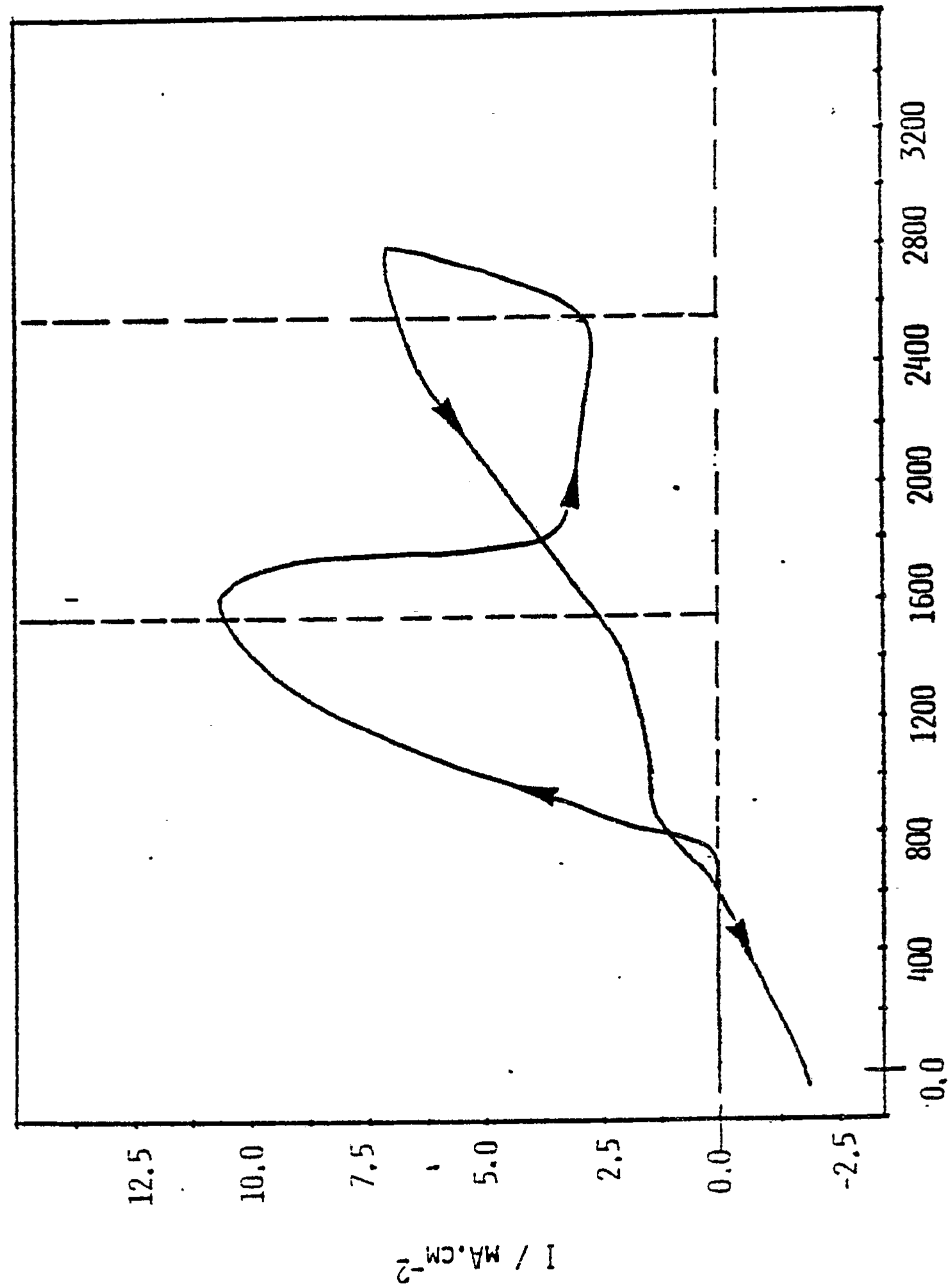
E / mV
0.0
400
800
1200
1600
2000
2400
2800
3200
I / MA.cm-2
12.5
10.0
7.5
5.0
2.5
0.0
-2.5

FIG. 3

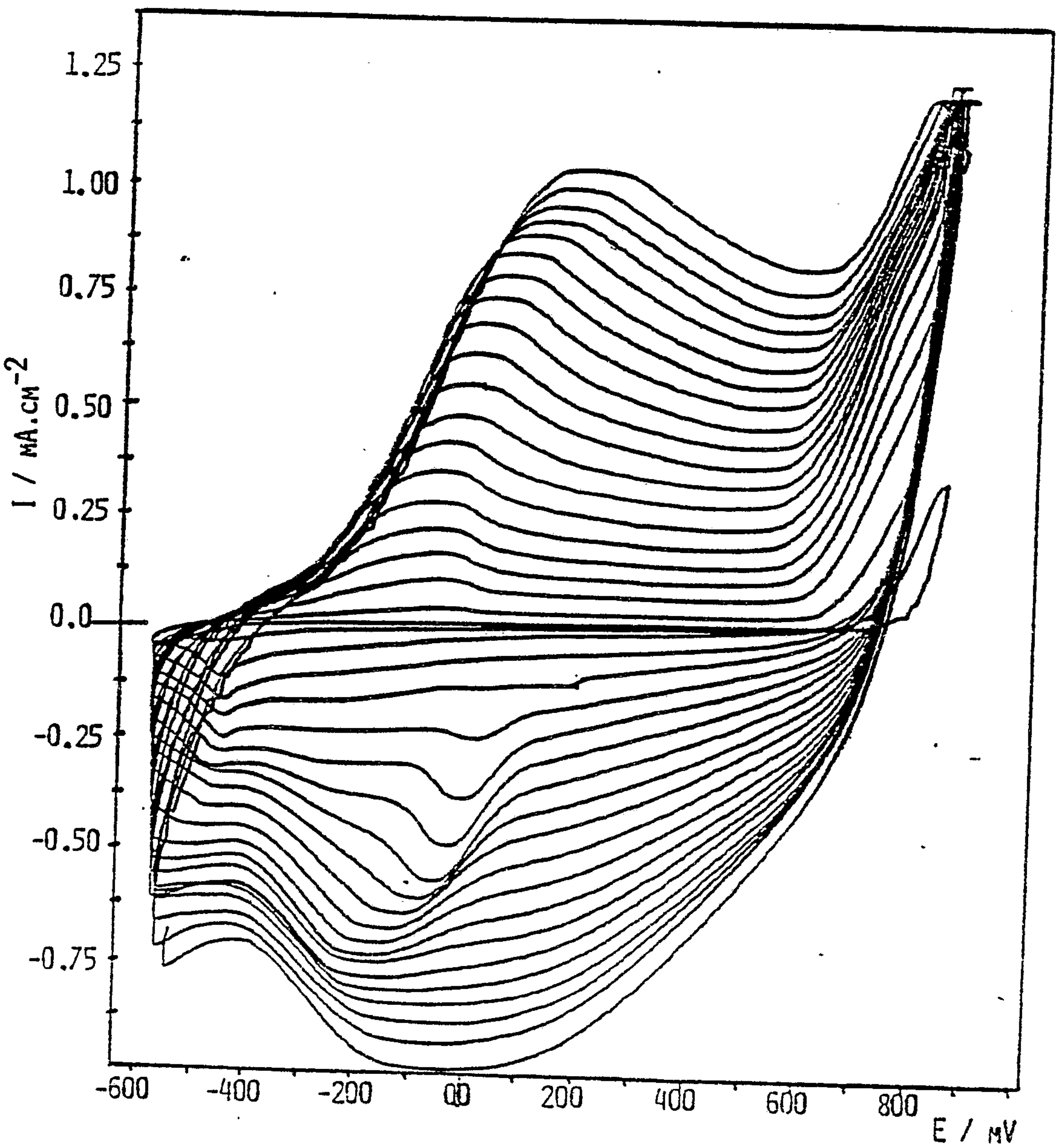
1.25
1.00
0.75
0.50
0.25
0.0
-0.25
-0.50
-0.75
I / mA.cm-2
-600
-400
-200
0.0
200
400
600
800
E / mV

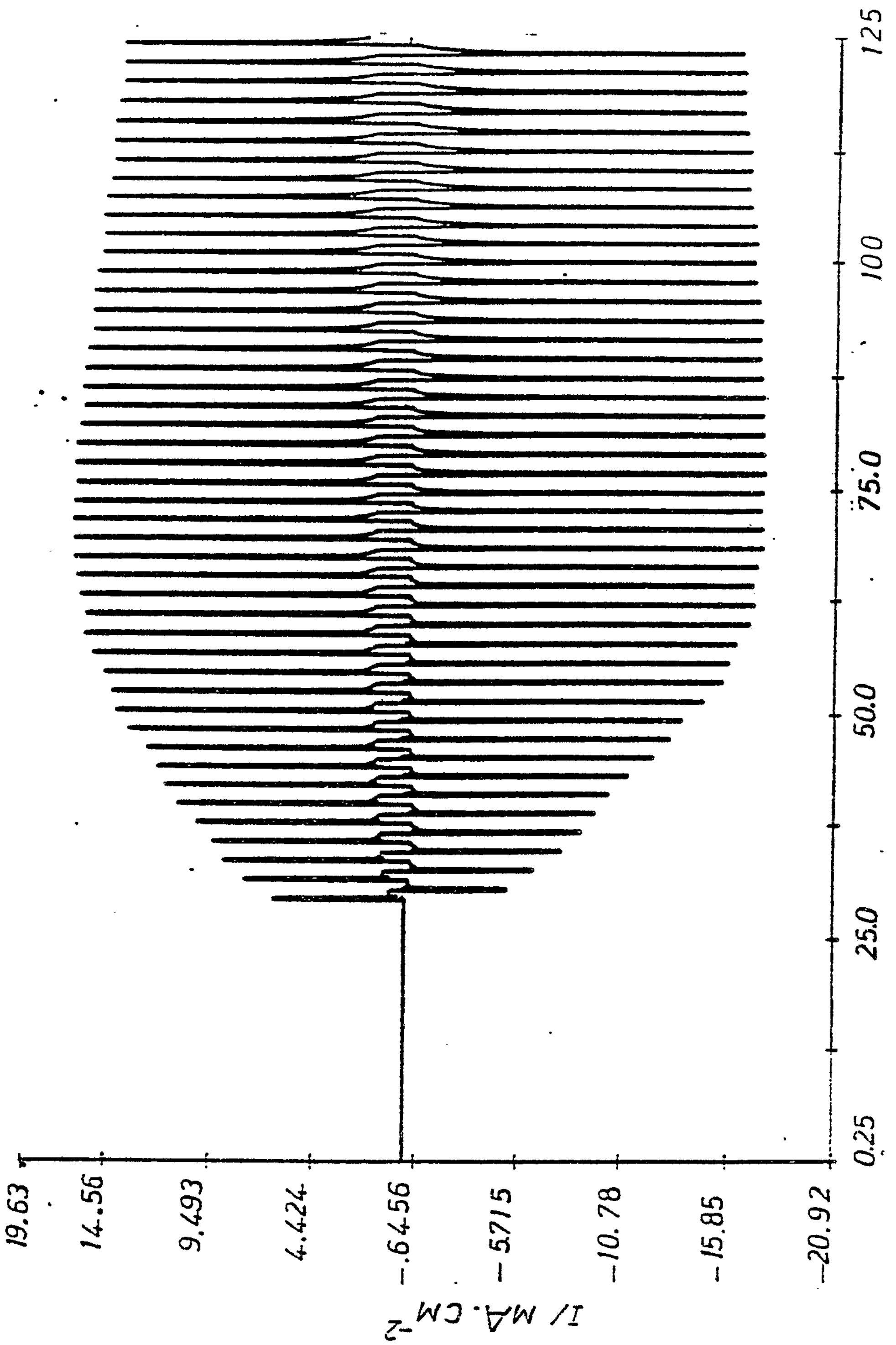
19.63
14.56
9.493
4.424
-.6456
-5.715
-10.78
-15.85
-20.92
I/ MA.CM-2
0.25
25.0
50.0
75.0
100
125
t/SG

FIG. 4

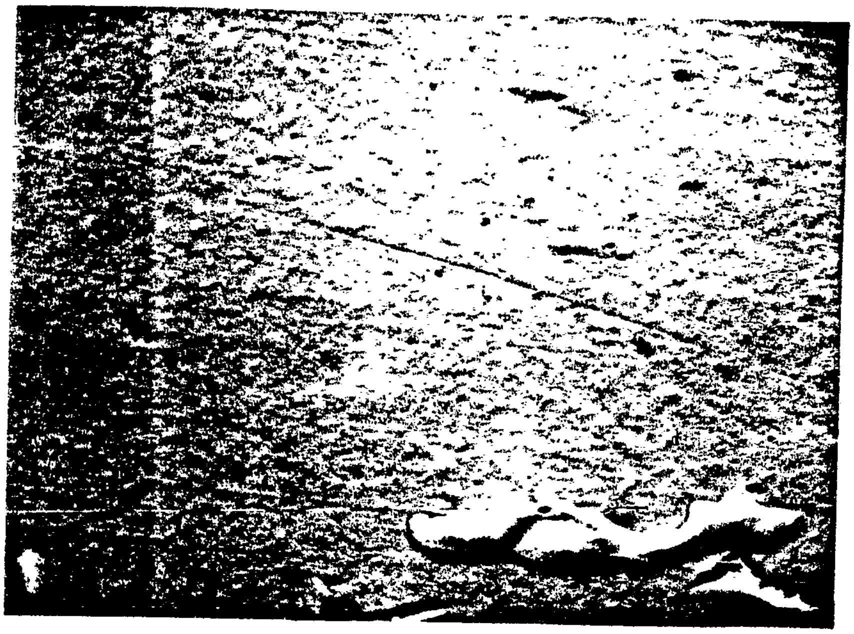

FIG. 7

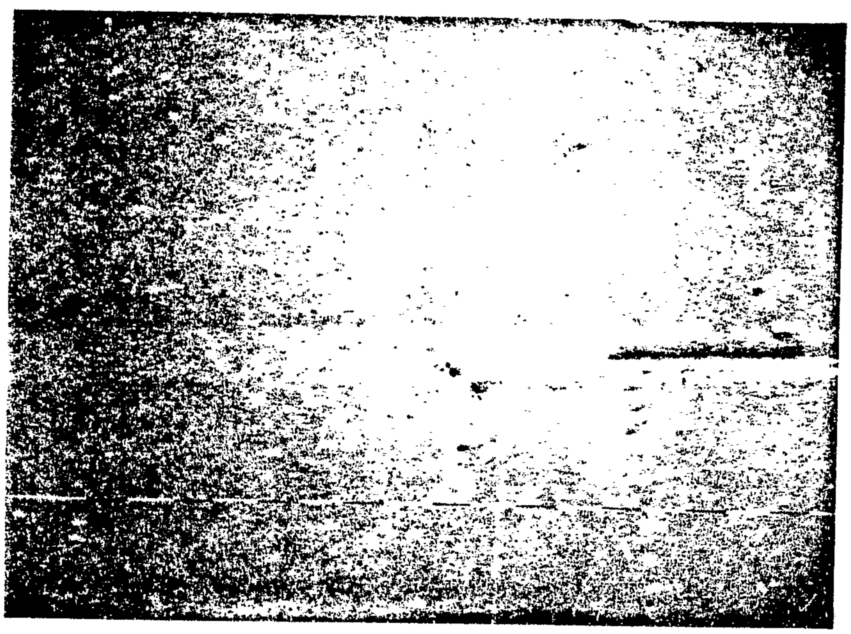

FIG. 8

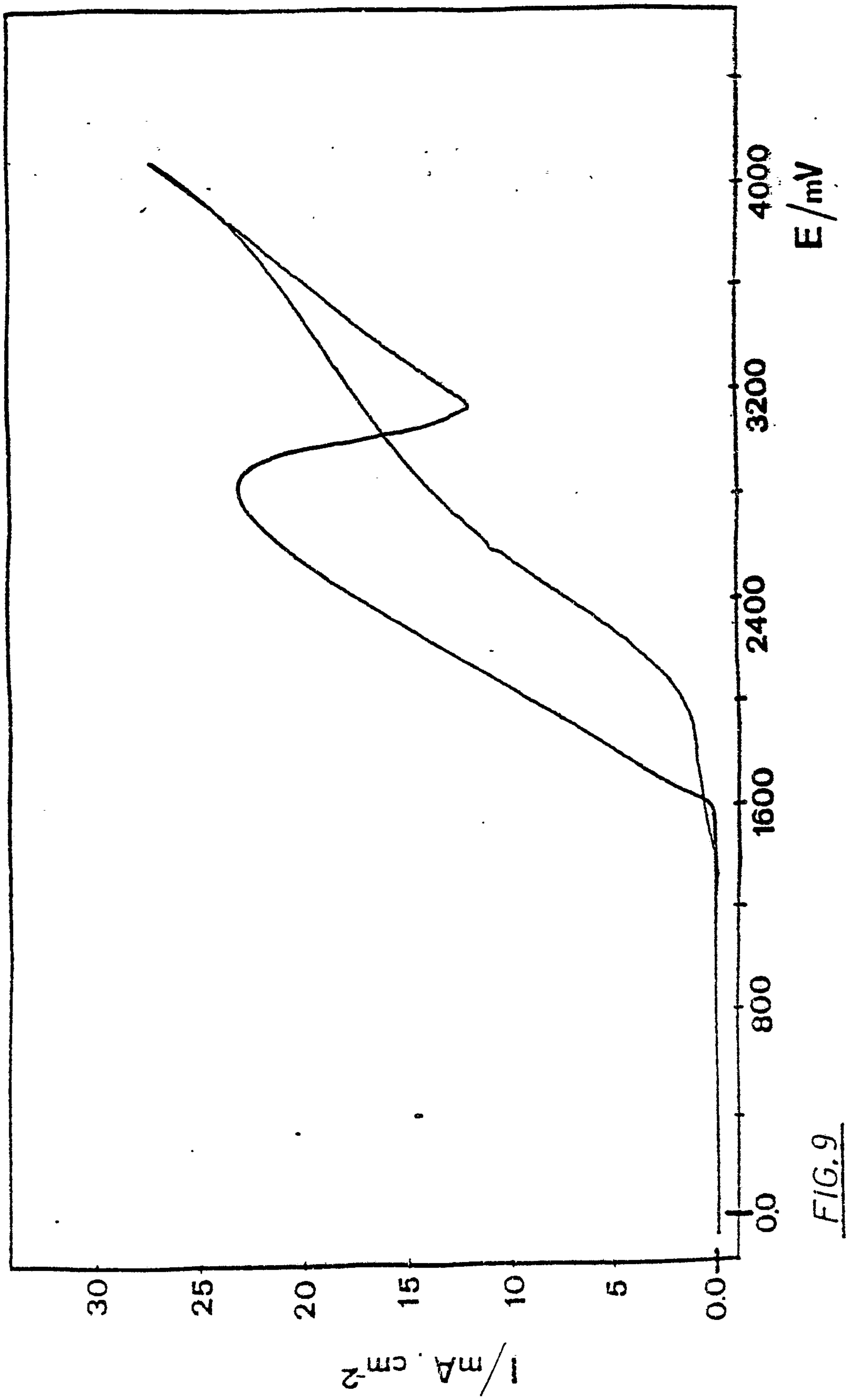


FIG. 9

FIG. 10

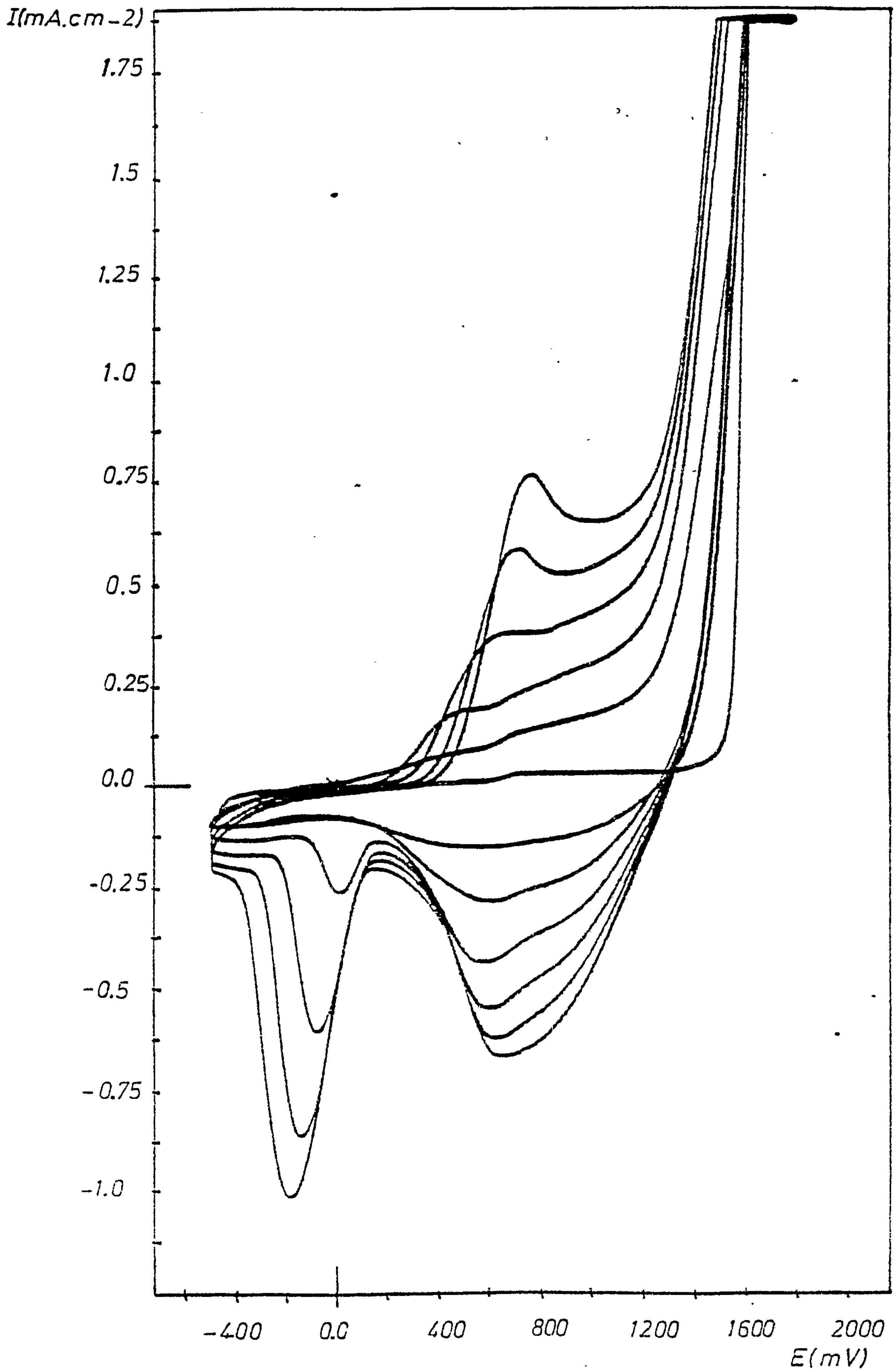
I(mA.cm-2)
1.75
1.5
1.25
1.0
0.75
0.5
0.25
0.0
-0.25
-0.5
-0.75
-1.0
-400
0.0
400
800
1200
1600
2000
E(mV)

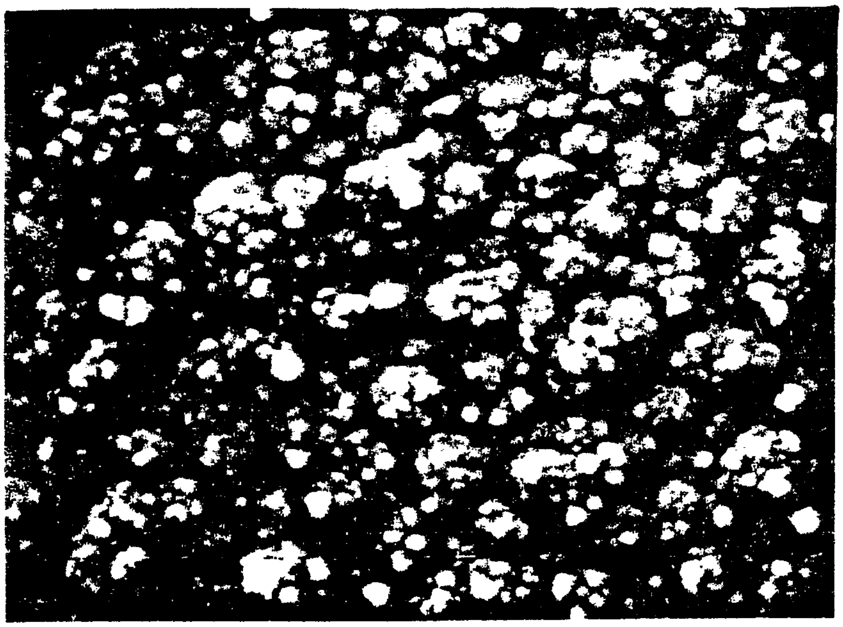

FIG. 11

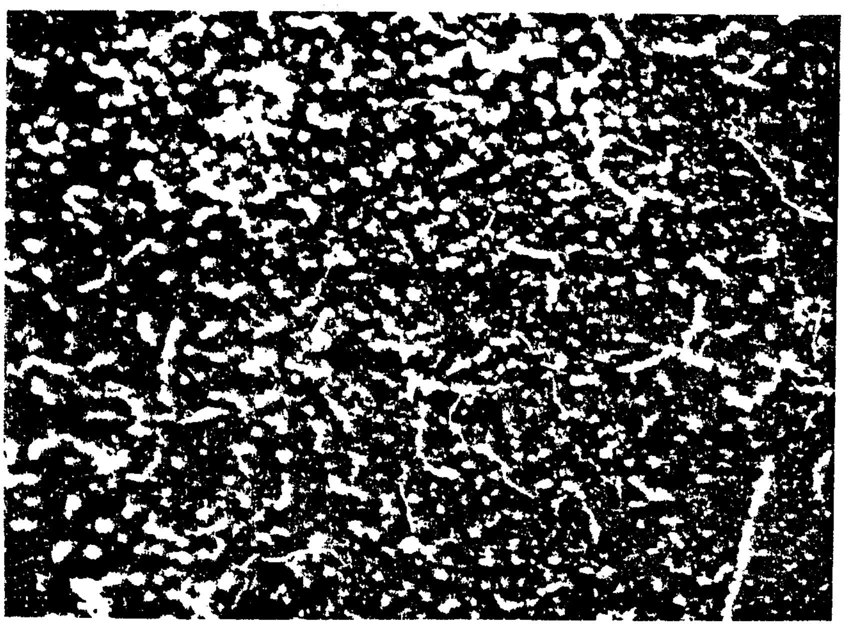

FIG. 12

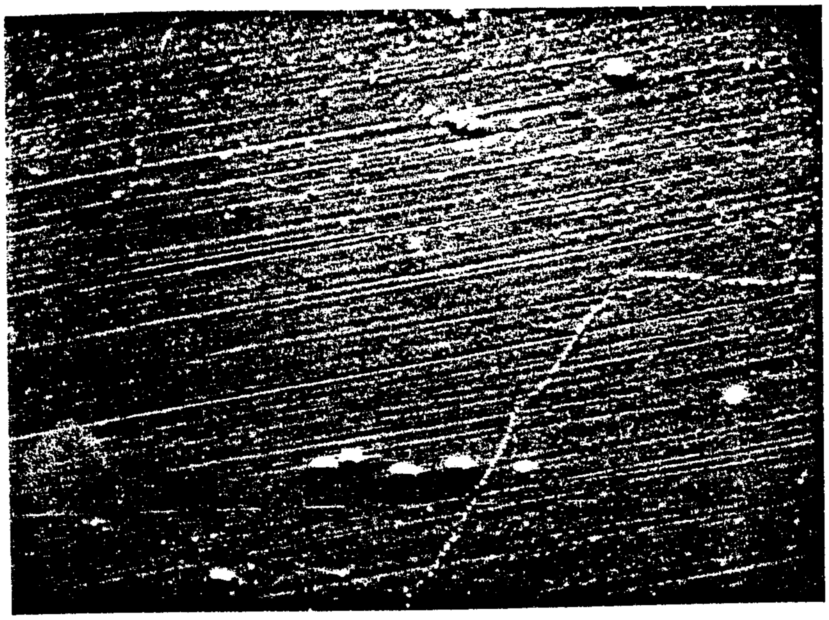

FIG. 13

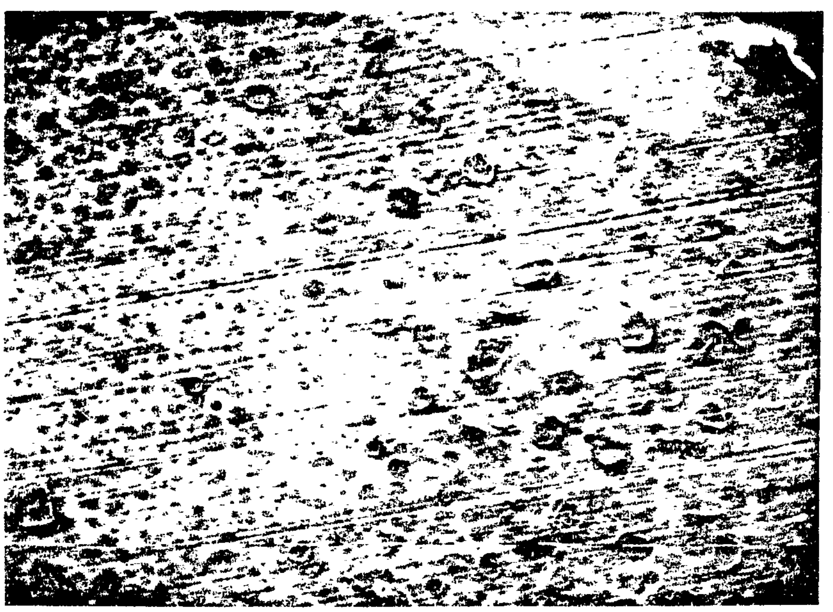

FIG. 14

European Patent Office

# EUROPEAN SEARCH REPORT

Application number

EP 88500047.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE - A1 - 3 340 679 (BASF)<br>* Page 3, line 35 - page 6, line 18; page 11, lines 15-21 *<br>-- | 1,2,3, 4,10 | C 25 B 3/10 |
| P,A | DE - A1 - 3 626 341 (VARTA)<br>* Claims 1,7 *<br>-- | 1-5,10 | |
| A | US - A - 4 478 689 (LOCH)<br>* Abstract; fig. 2A,2B *<br>---- | 4,5 | |
| | | | TECHNICAL FIELDS SEARCHED (Int. Cl.4) |
| | | | C 25 B<br>C 25 C |

The present search report has been drawn up for all claims

| Place of search | Date of completion of the search | Examiner |
|---|---|---|
| VIENNA | 01-02-1989 | LUX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document